# EUROPEAN PATENT APPLICATION

(11) **EP 1 452 502 A1**
(43) Date of publication of application: **01.09.2004**
(21) Application number: 03029785.7
(22) Date of filing: 23.12.2003
(51) Int. Cl.: C03C 25/18, C03C 25/10

(54) **Systems and methods involving optical fibers having seperate color layers**

(30) Priority: 28.02.2003 US 376898; 15.10.2003 US 686689
(71) Applicant: FITEL USA CORPORATION, Norcross, Georgia 30071 (US)
(72) Inventor: Kenkare, Nirupama, Tucker, GA 30071 (US); Moore, Robert C., Roswell, GA 30076 (US); Turnipseed, John M., Lilburn, GA 30047 (US); Xiong, Shunheohn M., Alpharetta, GA 30022 (US)
(74) Representative: Schoppe, Fritz, Dipl.-Ing.

(57) **Abstract**

An optical fiber including a layer of primary coating material having a first modulus, a layer of color coating material having a second modulus, a layer of secondary coating having a third modulus, and wherein the first modulus, the second modulus, and the third modulus are different values.

## Description

### TECHNICAL FIELD

The present invention generally relates to coating optical fibers. More particularly, the present invention relates to optical fibers having separate color layers.

### DESCRIPTION OF THE RELATED ART

Optical fiber production generally involves drawing a fiber, which usually is composed of silica glass, and then applying protective coating materials to the fiber. The primary layer of coating material typically comprises a relatively soft, polymeric material that protects the fiber from displacement, and subsequent losses associated therewith. The primary layer helps to absorb forces applied to the coated fiber and prevent their transmission to the fiber core, as well as seal the surface of the fiber from moisture to maintain high physical strength. Typically, a secondary layer of coating material comprising a higher modulus polymeric material is applied to the primary layer. The secondary layer protects the soft primary layer, providing robustness and abrasion resistance to the coated optical fiber.

In addition to protecting a fiber from displacement and maintaining high strength of the fiber, the coatings also function to prevent airborne particles from impinging upon and adhering to the surface of the drawn fiber, which can weaken the fiber and affect its transmission properties.

Optical fibers can be coated using a wet coating process which typically involves drawing a fiber through a reservoir of liquid polymer material and then curing the liquid polymer to harden it by exposure to curing radiation, such as, ultra-violet light. In a dual coating process, the coating materials are applied in tandem or simultaneously (within the same applicator or die assembly). The tandem arrangement applies a primary coating layer which is then cured, and then a secondary coating material is applied and cured. This process has been termed "wet-on-dry" in trade literature . In a simultaneous dual coating arrangement, both coating materials are applied to the fiber substrate after which they are cured simultaneously with the exposure of suitable radiation. In both cases, the primary coating material is typically a low modulus polymeric material and the secondary coating material is a relatively high modulus polymeric material

Optical fibers are often provided with coloration that allows the individual fibers to be quickly and properly identified. Existing methods include providing a color layer for the optical fiber in a post-draw step. For example, for both the tandem and simultaneous application arrangements, the color layer is provided only after the outermost protective layer had been cured. This method also constitutes a "wet-on-dry" coating process. Such a colorization processes can require increased height on the draw tower if this operation is performed during the draw process, or else as an additional step after drawing the fiber has been completed, both of which can increase manufacturing costs.

Present methods of colorization also include adding colorants to the primary coating material, the secondary coating material, or both. Addition of colorants to the primary and secondary coating materials can affect the properties of the materials, and therefore the performance of the optical fibers on which they are used. As well, because the materials are colored prior to application, it is not uncommon to have inventories of unnecessarily colored materials remaining after drawing operations are complete. These inventories often go to waste and contribute to increased manufacturing costs.

### SUMMARY

Briefly described, systems and methods involving optical fibers having separate color layers provide an optical fiber including a layer of primary coating material having a first modulus, a layer of color coating material having a second modulus, a layer of secondary material having a third modulus, and wherein the first, the second, and the third moduli are different values.

As well, other embodiments provide an apparatus and a method for applying a color coating material, a primary coating material and a secondary coating material to an optical fiber. A representative embodiment of the applicator assembly includes: a pressurized source of the primary coating material; a primary reservoir in fluid communication with the pressurized source of the primary coating material, the primary reservoir being configured for applying a layer of the primary coating material to the optical fiber; a primary die adjacent the primary reservoir, the primary die including a primary land configured to size the layer of the primary coating material; a pressurized source of the color coating material; a color reservoir in fluid communication with the pressurized source of the color coating material, the color reservoir being configured for applying a layer of the color coating material to the optical fiber; a color die adjacent the color reservoir, the color die including a color land configured to size the layer of the color coating material; a pressurized source of the secondary coating material; a secondary reservoir in fluid communication with the pressurized source of the secondary coating material, the secondary reservoir being configured for applying a layer of the secondary coating material to the optical fiber; a secondary die adjacent the secondary reservoir, the secondary die including a secondary land configured to size the layer of the secondary coating material; and wherein the primary reservoir, color reservoir and the secondary reservoir are in fluid communication.

Another embodiment can also be viewed as a method for forming an optical fiber. In this regard, a representative method can be broadly summarized by the following steps: drawing an optical fiber; applying a layer of primary coating material to the optical fiber; applying a layer of color coating material to the optical fiber; applying a layer of secondary coating material to the optical fiber; wherein the layer of the primary coating material, the layer of the color coating material, and the layer of the secondary coating material are each applied prior to the other layers being cured.

Other systems, methods, features and/or advantages will be or may become apparent to one with skill in the art upon examination of the following drawings and detailed description. It is intended that all such additional systems, methods, features and/or advantages be included within this description and be protected by the accompanying claims.

### BRIEF DESCRIPTION OF THE DRAWINGS

The components in the drawings are not necessarily to scale. Moreover, in the drawing, like reference numerals designate corresponding parts throughout the several views.
FIG. 1 is a schematic diagram of a system for applying coatings to optical fibers, including a preferred embodiment of the applicator assembly.
FIGs. 2A-2C are perspective views of optical fibers having a separate color layer, with portions of the various layers being cut-away.
FIG. 3 is a cross-sectional view of a preferred embodiment of the applicator assembly.
FIG. 4 is a cross-sectional view of a first coating die as shown in FIG. 3.
FIG. 5 is a cross-sectional view of a second coating die as shown in FIG. 3.
FIG. 6 is a cross-sectional view of a third coating die as shown in FIG. 3.
FIG. 7 is a partial cross-sectional view of a portion of the applicator assembly as shown in FIG. 3.
FIG. 8 is a cross-sectional view taken along line 8-8 of the applicator assembly as shown in FIG. 3.
FIG. 9 is a cross-sectional view of the first die as shown in FIG. 8.
FIG. 10 is a cross-sectional view of the second die as shown in FIG. 8.
FIG. 11 is a cross-sectional view of the third die as shown in FIG. 8.
FIG. 12 is a flow diagram showing a preferred embodiment of a method of coating optical fibers.

### DETAILED DESCRIPTION

Optical fibers, typically composed of silica glass, require protective coatings that prevent damage to the fiber from moisture, abrasion, stress, etc. These protective coatings typically include a primary coating layer of a relatively soft, polymeric material and a secondary coating layer of a polymeric material having a higher modulus than the primary coating material. The protective coatings are preferably applied soon after drawing the fiber.

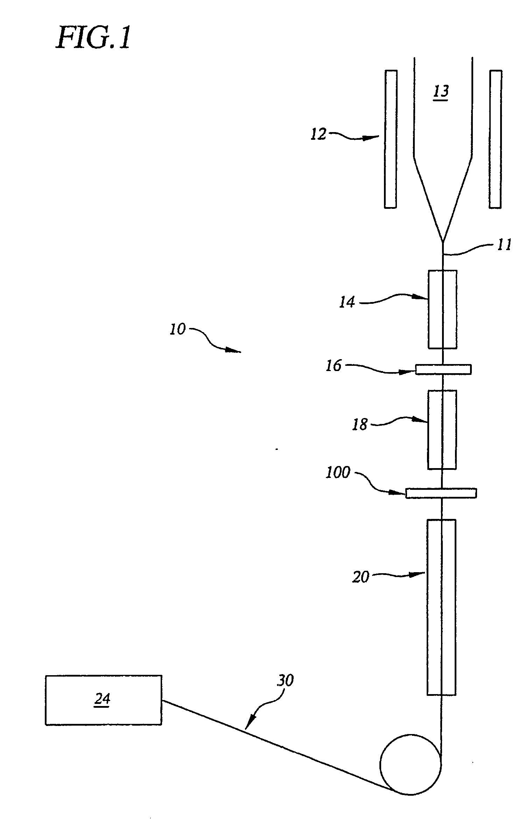

Referring now in more detail to the drawings, FIG. 1 shows an embodiment of a system 10, which is used to draw an optical fiber 11 from a cylindrical preform 13 and then coat the optical fiber 11 utilizing an embodiment of a multiple feed applicator assembly 100. Typically, manufacture of optical fiber 11 begins by drawing the glass preform 13 that is held in a furnace 12 at a temperature of 2000°C or higher. Instruments 16, such as cladding diameter and fiber tension gauges provide feedback to the furnace temperature and draw capstan speed controllers (not shown). The optical fiber 11 passes through several cooling stages, such as an annealer 14 and a chiller 18, that control the axial temperature profile of the optical fiber 11 within a desirable range. When the optical fiber 11 has cooled enough, typically to less than 80°C, two protective liquid coating materials and a color coating material are applied with the multiple feed applicator assembly 100. Note, although two protective coating layers are typical, various numbers of protective coating layers can be applied with the multiple feed applicator assembly 100. Next, the coating layers are cured, typically in ultraviolet ovens 20, and the coated optical fiber 30 is wound onto a takeup spool 24.

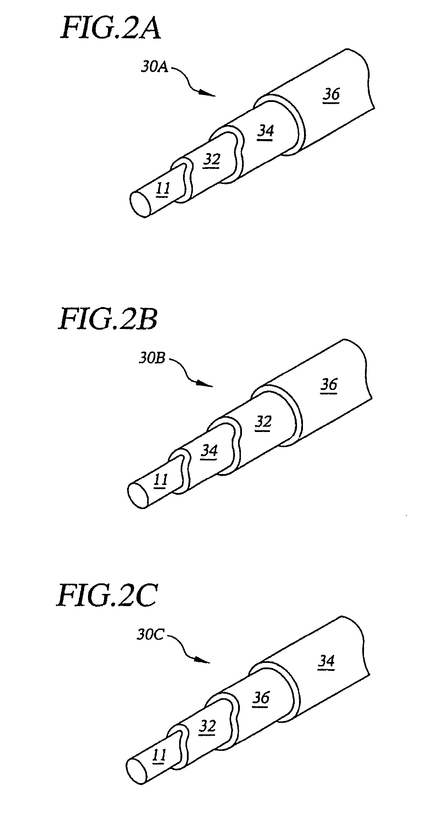

FIG. 2A illustrates an embodiment of a coated optical fiber 30A that includes a color coating layer 34 that is separate from the primary coating layer 32 and the secondary coating layer 36. As shown, the primary coating layer 32 is adjacent the optical fiber 11, the color coating layer 34 is adjacent the primary coating layer 32, and the secondary coating layer 36 forms the outermost protective layer. Preferably, the primary coating material is a relatively soft polymeric material that protects the optical fiber 11 from displacement and losses associated therewith, while the secondary coating material is a higher modulus polymeric material that offers high strength and abrasion resistance. Typically, the color coating material has a modulus (units of pressure) between that of the primary and secondary coating materials. The modulus of the color coating material can be chosen to optimize transmission loss performance or subsequent required operations such as stripping protective layers (such as ribbon matrix or buffer) from the coated optical fiber 30.

FIGs. 2B and 2C illustrate alternative embodiments of the coated optical fiber 30A as shown in FIG. 2A. In FIG. 2B, the color coating layer 34 is adjacent to the optical fiber 11 and the primary coating layer 32 is between the color coating layer 34 and the outermost secondary coating layer 36. In FIG. 2C, the primary coating layer 32 is adjacent the optical fiber 11, the secondary coating layer 36 is adjacent the primary coating layer 32, and the color coating layer 34 is the outermost layer. Preferably, the material of each layer (primary 32, color 34 and secondary 36) is selected with regard to the disposition of each layer within the coated optical fiber 30A-C. Typically, each material will be of a different modulus.

In the embodiments of the coated optical fibers 30A-C shown, the primary and secondary coating layers 32, 36 are 15-40 microns thick while the color coating layer 34 is 2-10 microns thick, but preferably 4-7 microns thick.

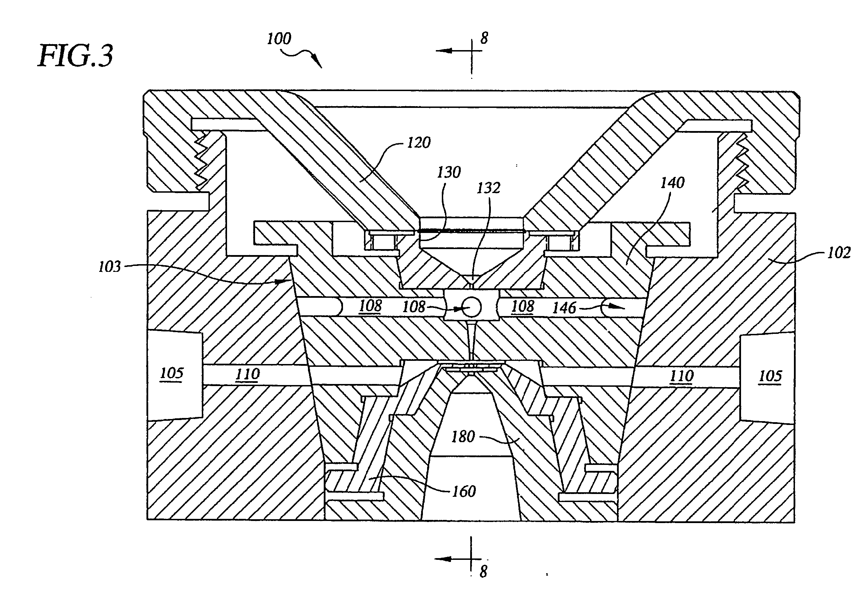

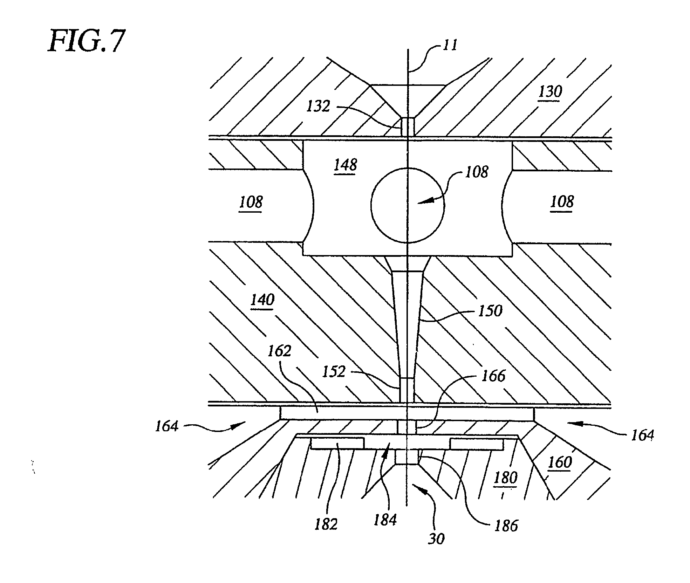

FIG. 3 illustrates, in cross-section, an embodiment of the multiple feed applicator assembly 100 for coating optical fibers as shown in FIG. 1. For clarity, an optical fiber to be coated has not been shown passing through the applicator assembly 100. However, as shown in FIG. 7, an optical fiber 11 to be coated passes along the centerline of the entry land 132, the first land 152, the second land 166, and the third land 186. As assembled, the applicator assembly 100 includes a die cap 120, an entry die 130, a first die 140, a second die 160, a third die 180, and a body portion 102. In the preferred embodiment shown, the body portion 102 includes a cavity 103 having tapered walls for receiving and supporting the first die 140.

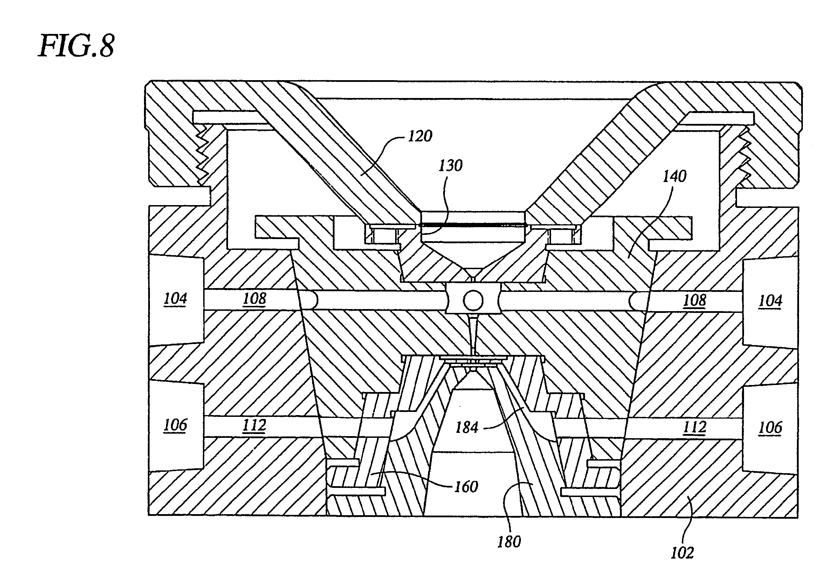

As shown in FIGs. 3 and 8, the body portion 102 includes a first coating material source 104 (FIG. 8), a first coating port 108 (FIG. 8), a second coating material source 105, a second coating port 110, a third coating material source 106 (FIG. 8), and a third coating port 112 (FIG. 8). The first coating ports 108 of the body portion 102 feed into an annular groove 146 formed in the first die 140 adjacent to the body portion 102. The annular groove 146 is in fluid communication with first coating ports 108 formed in the first die 140. Second coating ports 110 formed in the body portion 102 are in fluid communication with the second coating material source 105 and corresponding second coating ports 110 formed in the first die 140. The third coating ports 112 formed in the body portion 102 are in fluid communication with the third coating material source 106 and corresponding third coating ports 112 formed in the first die 140 and the second die 160, as best seen in FIG. 8. Note, although multiple first coating material sources 104, second coating material sources 105, and third coating material sources 106 are shown, embodiments of the applicator assembly 100 are envisioned wherein a single first coating material source 104, a single second coating material source 105, and a single third coating material source 106 are in fluid communication with both the first coating ports 108, the second coating ports 110, and the third coating ports 112, respectively. The first, second, and third coating material sources 104, 105, 106 can be pressurized by one or more pumps (not shown), and like devices.

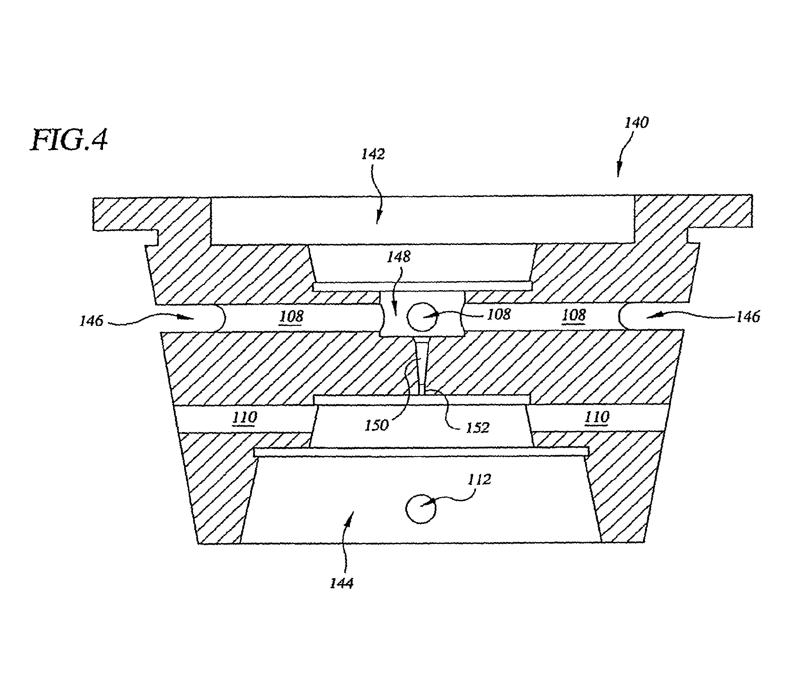

As shown in FIG. 4, the first die 140 includes a first cavity 142 and second cavity 144. The first cavity 142 is arranged and configured to receive an entry die 130 (FIG. 3). The entry die 130 includes an entry land 132 through which the optical fiber passes. The entry land 132 helps to ensure coating material does not flow upwardly and out of the first coating reservoir 148. The second cavity 144 is arranged and configured to receive the second die 160 and the third die 180. As previously noted, the first die 140 includes an annular groove 146 and first coating ports 108. As shown, preferably, the first die 140 includes four first coating ports 108 extending radially from the first coating reservoir 148 to the annular groove 146, such that each first coating port 108 is perpendicular to adjacent first coating ports 108. This arrangement of first coating ports 108 allows for coating material to be supplied to the first coating reservoir 148 in a manner that minimizes lateral forces exerted on an optical fiber disposed within the first coating reservoir 148. Preferably, adjacent the first coating reservoir 148 is a conical section 150 in which viscoelastic forces begin to form, thereby assisting in centering the optical fiber. Adjacent the conical section 150 is the first land 152. The first land 152 is arranged and configured such that the viscoelastic forces developed within the first land 152 center the optical fiber. The viscoelastic forces formed in the first land 152 maintain proper centering of the optical fiber throughout the applicator assembly 100.

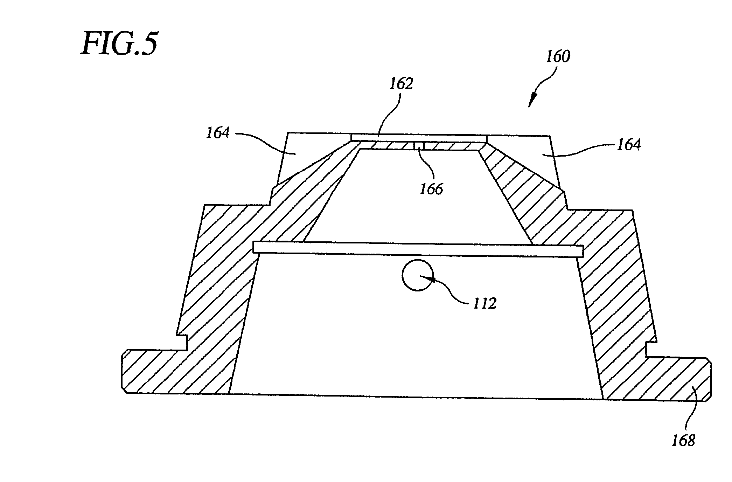

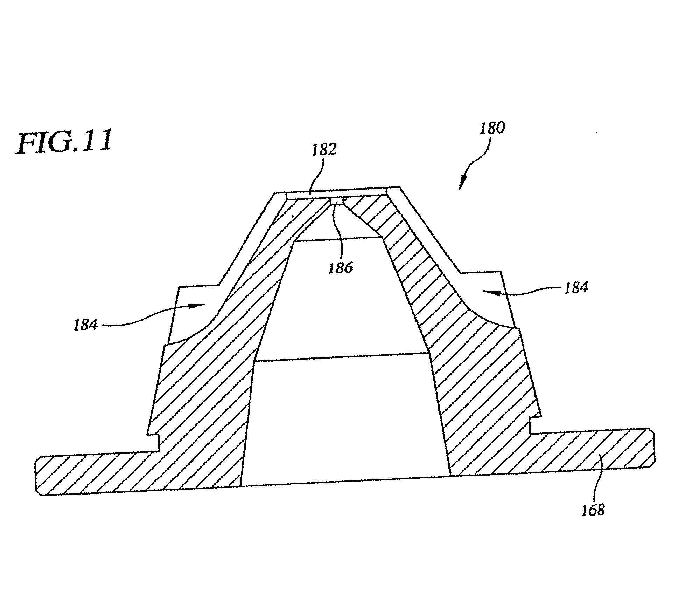

, The second cavity 144 of the first die 140 is arranged and configured to receive the second die 160 (FIG. 5). As previously noted, the first die 140 includes second coating ports 110 that are aligned with corresponding second coating ports 110 disposed in the body portion 102. As will be discussed in greater detail hereinafter, the second coating ports 110 of the first die 140 are further aligned with second inlets 164 formed in the second die 160. As well, the first die 140 includes third coating ports 112 aligned with corresponding third coating ports 112 formed in the body portion 102 (FIG. 7). The third coating ports 112 are further aligned with third coating inlets 184 (FIG. 11).

As shown in FIG. 5, the second die 160 includes a second coating reservoir 162, second inlets 164, and a second land 166. As noted above, the second inlets 164 are in fluid communication with the second coating source 105 by way of the second coating ports 110. As such, the second coating reservoir 162 applies a second coat of material to the first coat of material applied to the optical fiber in the first coating reservoir 148 and sized by the first land 152.

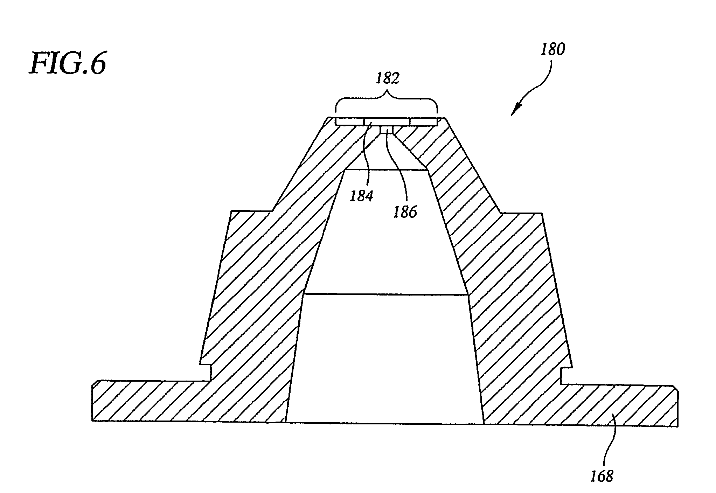

As shown in FIG. 6, the third die 180 includes a third coating reservoir 182, third coating inlets 184, and a third land 186. The third die 180 is received within the second die 160 such that the third inlets 184 are in fluid communication with the third coating ports 112 of the second die 160, as best seen in FIG. 8. As the optical fiber passes through the third coating reservoir 182, coating material is applied to the second coat of material on the optical fiber. The optical fiber next passes through the third land 186, which is sized such that the diameter of the layer of the third coating can be adjusted by controlling the pressure of the third coating source 106. Preferably, the third die 180 and the second die 160 are secured in position by passing threaded fasteners through the retention flanges 168 on both of the dies 160 and 180 and threadably engaging mounting holes (not shown) disposed in the first die 140.

With reference to FIG. 7, the coating process of an optical fiber 11 (as shown in FIG. 2A) using an embodiment of an applicator assembly 100 is discussed. The optical fiber 11 passes through the entrance die 130 and into the first coating reservoir 148 where the primary coating material is contained under pressure. The diameter of the entry land 132 is preferably chosen such that it is sufficient to avoid optical fiber 11 impingement thereon and sufficiently narrow such that the pressurized primary coating material in the first coating reservoir 148 is effectively contained, rather than rising up through the entry land 132. As well, the diameter of the entry land 132 is selected such that air is prevented from entering the first coating reservoir 148 and therefore the primary coating layer 32. The pressure at which the primary coating material is applied serves two purposes including sealing the primary coating material against the optical fiber 11 at the entry land 132, thereby preventing bubble entrainment, and pushing the primary coating material through the first land 152 to help maintain the diameter of the primary coating layer 32.

After passing through the first primary land 152, the optical fiber 11 enters the second coating reservoir 162 where a layer of color coating material is applied to the primary coating layer 32. As shown, the second coating reservoir 162 is formed between the first die 140 and the second die 160, adjacent the first land 152. The second coating reservoir 162 is fed by the same second coating source 105. Next, the optical fiber 11 enters the third coating reservoir 184 where a layer of secondary coating material is applied to the color coating layer 34. The third coating reservoir 184 is fed by the third coating source 106.

The applicator assembly 100 (FIG. 3) can also be used to produce the embodiments of coated optical fiber 30B and 30C, as shown in FIGs. 2B and 2C, respectively. The process used to create coated optical fiber 30B (FIB. 2B) is similar to the process discussed above with the exceptions that the color coating material is applied to the optical fiber 11 in the first coating reservoir 148, the primary coating material is applied to the color coating layer 34 in the second coating reservoir 162, and the secondary coating material is applied to the primary coating layer 32 in the third coating reservoir 182. The color layer 34 of coated optical fiber 30B actually functions as a primary layer in that it is applied directly to the optical fiber 11. In this instance, the modulus of the color coating material is preferably less than or equal to the modulus of the primary coating layer 32. For coated optical fiber 30C (FIB. 2C), the primary coating material is applied to the optical fiber 11 in the first coating reservoir 148, the secondary coating material is applied to the primary coating layer 32 in the second coating reservoir 162, and the color coating material is applied to the secondary coating layer 36 in the third coating reservoir 182.

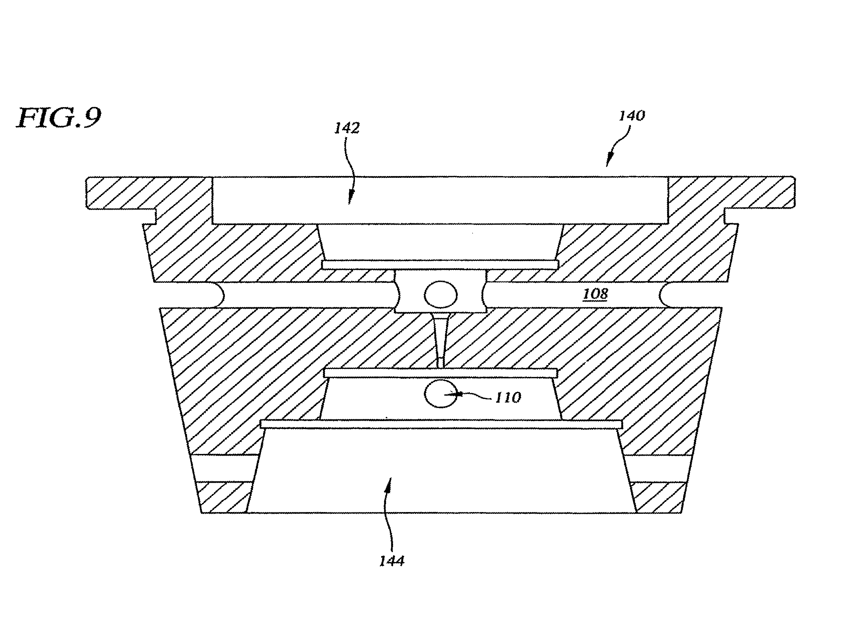

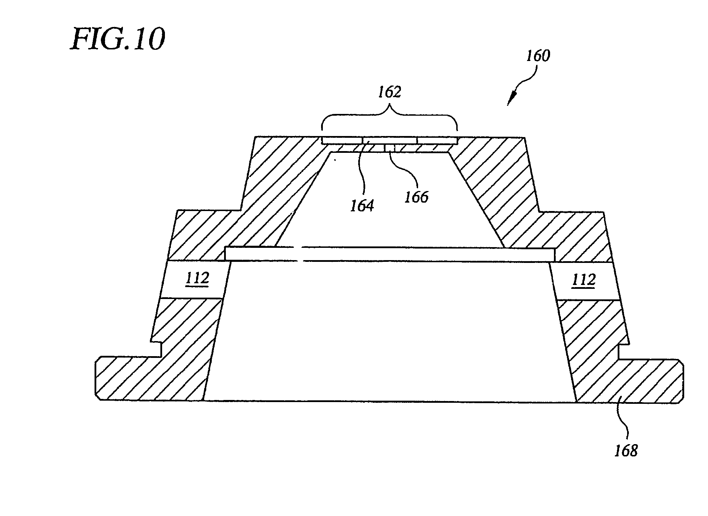

FIG. 8 is a cross-sectional view of the applicator assembly 100 taken along line 8-8 of FIG. 3, showing the entire cross section. FIGs. 9-11 1 are detailed cross sections of the first die 140, the primary die 160, and third die 180, respectively, as shown in FIG. 8 and are presented for clarification of the structure of the applicator assembly 100. Note, although FIGs. 3-11 show the primary coating applied in a single layer, there is no intention to limit the applicator assembly to this configuration only. For example, embodiments are envisioned wherein the primary coating layer 32 is applied in at least two adjacent layers, such as in the first coating reservoir 148 and the second coating reservoir 162. This process may offer various manufacturing advantages that are discussed in pending U.S. Application No. 10/376,898, entitled "MULTIPLE FEED APPLICATOR ASSEMBLY FOR COATING OPTICAL FIBERS," which is incorporated herein by reference. As well, application of the primary coating material in at least two adjacent layers requires the addition of at least one additional coating reservoir (not shown) to the applicator assembly so that the color coating materials and secondary coating materials can be applied.

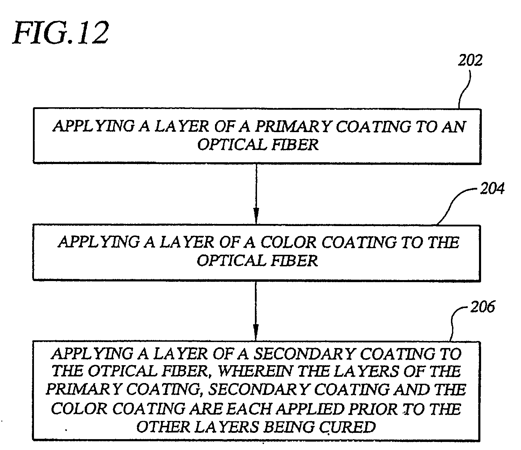

The applicator assembly for applying a primary coating, a secondary coating and a color coating to an optical fiber can also be viewed as providing a method of applying a primary coating, a secondary coating and a color coating to an optical fiber. In this regard, as shown in FIG. 12, a representative method can be broadly summarized by the following steps: applying a layer of the primary coating to the optical fiber (as shown in block 202), applying a layer of the color coating to the optical fiber (as shown in block 204), and applying a layer of the secondary coating to the optical fiber, wherein the layers of primary coating, secondary coating, and color coating are each applied prior to the other layers being cured (as shown in block 206).

It should be emphasized that the above-described embodiments are merely possible examples of implementations. Many variations and modifications may be made to the above-described embodiments. All such modifications and variations are intended to be included herein within the scope of this disclosure and to be protected by the following claims.

## Claims

1. An applicator assembly for applying a primary coating material, a secondary coating material and a color coating material to an optical fiber, the assembly comprising:
a pressurized source of the primary coating material;
a primary reservoir in fluid communication with the pressurized source of the primary coating material, the primary reservoir being configured for applying a layer of the primary coating material to the optical fiber;
a primary die adjacent the primary reservoir, the primary die including a primary land configured to size the layer of the primary coating material;
a pressurized source of the color coating material;
a color reservoir in fluid communication with the pressurized source of the color coating material, the color reservoir being configured for applying a layer of the color coating material to the optical fiber;
a color die adjacent the color reservoir, the color die including a color land configured to size the layer of the color coating material;
a pressurized source of the secondary coating material;
a secondary reservoir in fluid communication with the pressurized source of the secondary coating material, the secondary reservoir being configured for applying a layer of the secondary coating material to the optical fiber; and
a secondary die adjacent the secondary reservoir, the secondary die including a secondary land configured to size the layer of the secondary coating material; and
wherein the primary reservoir, color reservoir and the secondary reservoir are in fluid communication.

2. The applicator assembly of claim 1, further comprising:
an entry die including an entry land, wherein the entry land, the primary land, the color land, and the secondary land are substantially axially aligned, and wherein the primary reservoir is disposed between the entry land and the primary land, the color reservoir is disposed between the primary land and the color land, and the secondary reservoir is disposed between the color land and the secondary land.

3. The applicator assembly of claim 1, further comprising:
an entry die including an entry land, wherein the entry land, the primary land, the color land, and the secondary land are substantially axially aligned, and wherein the primary reservoir is disposed between the entry land and the primary land, the secondary reservoir is disposed between the primary land and the secondary land, and the color reservoir is disposed between the secondary land and the color land.

4. The applicator assembly of claim 1, further comprising:
an entry die including an entry land, wherein the entry land, the primary land, the color land, and the secondary land are substantially axially aligned, and wherein the color reservoir is disposed between the entry land and the color land, the primary reservoir is disposed between the color land and the primary land, and the secondary reservoir is disposed between the primary land and the secondary land.

5. The applicator assembly of claim 1, further comprising:
an entry die including an entry land;
a second primary reservoir for applying a second layer of the primary coating material to the optical fiber;
a second primary die including a second primary land configured to size the second layer of the primary coating material; and
wherein the entry land, the primary land, the second primary land, the secondary land, and the color land are substantially axially aligned.

6. The applicator assembly of claim 5, wherein the color reservoir is disposed between the entry land and the color land, the primary reservoir is disposed between the color land and the primary land, the second primary reservoir is disposed between the primary land and the second primary land, and the secondary reservoir is disposed between the second primary land and the secondary land.

7. The applicator assembly of claim 5, wherein the primary reservoir is disposed between the entry land the primary land, the second primary reservoir is disposed between the primary land and the second primary land, the color reservoir is disposed between the second primary land and the color land, and the secondary reservoir is disposed between the color land and the secondary land.

8. The applicator assembly of claim 5, wherein the primary reservoir is disposed between the entry land and the primary land, the second primary reservoir is disposed between the primary land and the second primary land, the secondary reservoir is disposed between the second primary land and the secondary land, and the color reservoir is disposed between the secondary land and the color land.

9. The applicator assembly of claim 1, wherein at least one of the pressurized source of the primary coating material, the pressurized source of the color coating material, and the pressurized source of secondary coating material is a pump.

10. A method of forming an optical fiber, comprising the steps of:
drawing an optical fiber;
applying a layer of primary coating material to the optical fiber;
applying a layer of color coating material to the optical fiber;
applying a layer of secondary coating material to the optical fiber; and
wherein the layer of primary coating material, the layer of color coating material, and the layer of secondary coating material are each applied prior to the other layers being cured.

11. The method of claim 10, wherein the layer of color coating material is disposed between and adjacent the optical fiber and the layer of primary coating material.

12. The method of claim 10, wherein the layer of color coating is disposed between and adjacent the layer of primary coating material and the layer of secondary coating material.

13. The method of claim 12, wherein the step of applying a layer of the primary coating material further comprises applying a first layer of primary coating material adjacent the optical fiber and applying a second layer of primary coating material between and adjacent the first layer of primary coating material and the layer of secondary coating material.

14. The method of claim 10, wherein the layer of primary coating material is disposed between and adjacent the optical fiber and the layer of secondary coating material and the layer of color coating material is disposed adjacent the layer of secondary coating.

15. An optical fiber formed by the method of claim 10.

16. A method of forming an optical fiber, comprising the steps of:
(a) drawing an optical fiber;
(b) applying a layer of primary coating material to the optical fiber;
(c) applying a layer of color coating material to the layer of primary coating material; and
(d) applying a layer of secondary coating material to the layer of color coating material.

17. The method of claim 16, wherein (c) further comprises applying a second layer of primary coating between and adjacent the first layer of primary coating material and the layer of secondary coating material.

18. An optical fiber comprising:
a layer of primary coating material having a first modulus;
a layer of color coating material having a second modulus;
a layer of secondary coating having a third modulus; and
wherein the first modulus, the second modulus, and the third modulus are different values.

19. The optical fiber of claim 18, wherein the layer of color coating material is adjacent the optical fiber and the layer of primary coating material.

20. The optical fiber of claim 19, wherein the layer of color coating material has a thickness of between 2 to 10 microns.

21. The optical fiber of claim 19, wherein the layer of color coating material has a thickness of between 4 to 7 microns and the layers of primary coating material and secondary coating material each has a thickness from 15 to 40 microns.

22. The optical fiber of claim 18, wherein the layer of color coating material is adjacent the layer of primary coating material and the layer of secondary coating material.

23. The optical fiber of claim 22, wherein the layer of color coating has a thickness of between 2 to 10 microns.

24. The optical fiber of claim 22, wherein the layer of color coating material has a thickness of between 4 to 7 microns and the layers of primary coating material and secondary coating material each has a thickness from 15 to 40 microns.

25. The optical fiber of claim 18, wherein the layer of color coating material is adjacent the layer of the secondary coating material and further comprises an outermost layer of the optical fiber.

26. The optical fiber of claim 22, wherein the layer of color coating material has a thickness of between 2 to 10 microns.

27. The optical fiber of claim 22, wherein the layer of color coating material has a thickness of between 4 to 7 microns and the layers of primary coating material and secondary coating material each has a thickness from 15 to 40 microns.

28. A system for forming an optical fiber, comprising:
means for drawing an optical fiber;
means for applying a layer of primary coating material to the optical fiber;
means for applying a layer of color coating material to the layer of the primary coating material, but before the application of a layer of secondary coating material; and
means for applying the layer of secondary coating material to the layer of the color coating material.

29. The system of claim 28, wherein the means for applying a layer of primary coating material further comprises means for applying a first layer adjacent the optical fiber and means for applying a second layer adjacent the first layer.
